# EUROPEAN PATENT APPLICATION

(11) **EP 4 186 629 A1**
(43) Date of publication of application: **31.05.2023**
(21) Application number: 22209007.8
(22) Date of filing: 23.11.2022
(51) Int. Cl.: B23K 9/173, B23K 9/29, B23K 9/32

(54) **WELDING TORCH**

(30) Priority: 29.11.2021 JP 2021193109
(71) Applicant: DAIHEN Corporation, Yodogawa-ku Osaka-shi Osaka 532-8512 (JP)
(72) Inventor: TAKEI, Yuko, Osaka, 532-8512 (JP); TANAKA, Ryuji, Osaka, 532-8512 (JP)
(74) Representative: Boult Wade Tennant LLP

(57) **Abstract**

A welding torch (A1) includes: a cylindrical tip body (2) extending in an axis line (Ox) direction; an orifice member (3) arranged on a radially outer side of the tip body, between which and the tip body a first ring-like space (21) is formed; a cylindrical nozzle (4) arranged on a radially outer side of the orifice member with an interposition of a second ring-like space (411) and having an edge on one side in the axis line direction. The tip body has a first emission hole (22) via which an inner space of the tip body communicates with the first ring-like space, and the orifice member has a second emission hole (34) via which the first ring-like space communicates with the second ring-like space. The second ring-like space is substantially closed by a sealing part on another side in the axis line direction, and an outlet opening (341) of the second emission hole is arranged close the sealing part (36).

## Description

### TECHNICAL FIELD

The present disclosure relates to a welding torch used for consumable electrode type gas shield arc welding.

### BACKGROUND ART

This kind of welding torch is a member to play the role of feeding power, by a power feeding tip, to a wire fed by a wire feeder, and at the same time sending out this wire while covering it with shield gas sprayed by a nozzle, and its structure is shown by Patent Document 1, for example.

As to the welding torch described in Patent Document 1, the path of the shield gas is configured as follows.

It includes a tip body that has a central hole and is formed cylindrical, and an orifice member that is externally fit to this tip body to form a cylindrical ring-like space between an outer periphery of the tip body and itself. On the tip body a first emission hole is provided via which its central hole communicates with the ring-like space, and on the orifice member a second emission hole is provided via which the above ring-like space communicates with a space inside the nozzle.

The shield gas is guided into the space inside the nozzle, starting from the central hole of the tip body via the first emission hole, the ring-like space that the orifice member forms, and the second emission hole, and is emitted from the edge of the nozzle so that it surrounds the wire.

As to the configuration described in Patent Document 1, the space inside the nozzle extends toward the torch base side more than toward the second emission hole, and a drift including a vortex may be generated in a gas stream that is emitted from the second emission hole and moving toward the torch edge side in the space inside the nozzle. This might constitute a cause to shorten the laminar flow length of the gas stream emitted from the edge of the nozzle, which deteriorates the welding quality.

### TECHNICAL REFERENCE

### PATENT DOCUMENT

Patent Document 1: JP-A-2014-213359

### SUMMARY OF THE INVENTION

### Problems to be solved by the Invention

In light of the above circumstance, an object of the present disclosure is to provide a welding torch that extends the laminar flow length of the shield gas current emitted from the edge of the nozzle, and can improve the welding quality.

### Means for Solving the Problems

To deal with the above problems, the present disclosure adopted the following technical means.

A welding torch according to the present disclosure includes: a cylindrical tip body extending in an axis line direction; an orifice member which is arranged on a radially outer side of the tip body and between which and the tip body a first ring-like space is formed; a cylindrical nozzle arranged on a radially outer side of the orifice member with an interposition of a second ring-like space and having an edge on one side in the axis line direction, wherein the tip body has a first emission hole via which an inner space of the tip body communicates with the first ring-like space, and the orifice member has a second emission hole via which the first ring-like space communicates with the second ring-like space, and wherein the second ring-like space is substantially closed by a sealing part on another side in the axis line direction, and an outlet opening of the second emission hole is arranged close the sealing part.

In a preferred embodiment of the welding torch, the sealing part is formed by forming a large radius part on an edge on the other side in the axis line direction of the orifice member, and by having an outer periphery of the large radius part contacted with or arranged close to an inner peripheral surface of the nozzle.

In a preferred embodiment, a lateral surface on the one side in the axis line direction of the large radius part is a tapered surface with a radius increasing as it extends toward the other side in the axis direction, and the outlet opening of the second emission hole is arranged on the tapered surface.

In a preferred embodiment, on the other side in the axis line direction of the orifice member, a cylindrical insulator externally fit to the tip body is arranged, and an inner periphery of an edge on the other side in the axis direction of the nozzle is coupled to an outer periphery of the insulator by a metric fine screw.

In a preferred embodiment, on an inner peripheral surface of the nozzle, at a point to face a radial direction of the nozzle and to be opposed to the outlet opening of the second emission hole, a tapered flow straightening wall with a radius decreasing as it extends toward the other side in the axis line direction is formed.

### Advantages of the Invention

Regarding the welding torch having the above configurations, the shield gas introduced in the inner space of the tip body is guided into the space inside the nozzle (the second ring-like space) via the first emission hole, the first ring-like space, and the second emission hole, and is sprayed as a jet surrounding the welding wire from the edge of the nozzle (an edge on one side in the axis line direction).

Further, the space inside the nozzle (the second ring-like space) is substantially closed on the base side of the nozzle (on the other side in the axis line direction) by the sealing member. The outlet opening of the second emission nozzle is arranged close to the above sealing member, and the shield gas guided out from the second emission hole is smoothly led to the edge side, as the stream flowing toward the base side in the space inside the nozzle is suppressed, to thereby reduce the drift caused by the generation of the vortex. As a result, the laminar flow length of the gas stream sprayed from the edge of the nozzle is extended, and the sufficient shield width gas is secured by the shield at the welding target point, which improve the welding quality.

The other features and advantages of the present disclosure will be clearer according to the detailed explanations below with reference to the drawings.

### BRIEF EXPLANATION OF DRAWINGS

FIG. 1 is a vertical cross sectional view of the welding torch according to the first embodiment of the present disclosure.
FIG. 2 is a cross sectional view taken along line II-II of Fig. 1.
FIG. 3 is a cross sectional view taken along line III-III of Fig. 1.
FIG. 4 is a perspective view of the orifice member.
FIG. 5 is a vertical cross sectional view of the welding torch according to the second embodiment of the present disclosure.

### MODE FOR CARRYING OUT THE INVENTION

Below, preferable embodiments of the present disclosure are specifically explained with reference to the accompanying drawings.

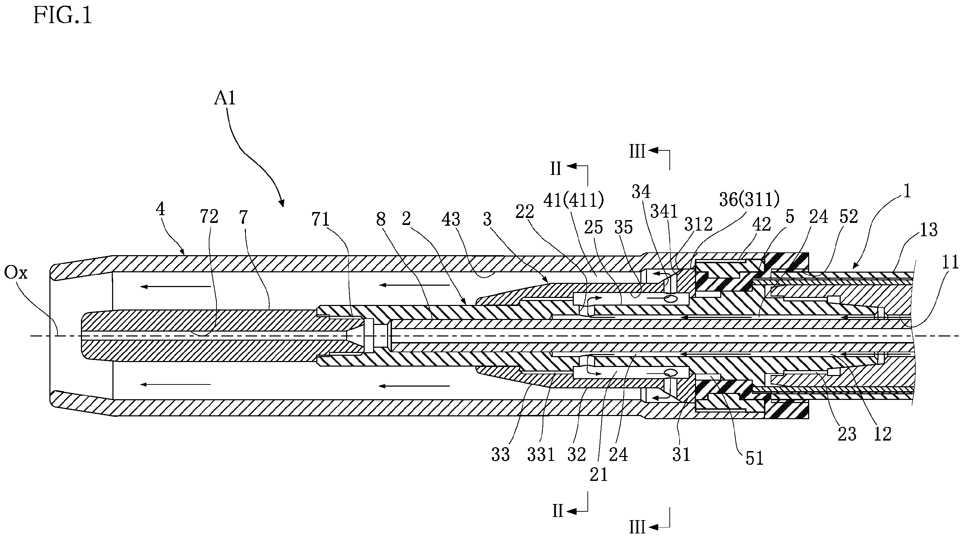

Figs. 1-4 show a welding torch A1 according to a first embodiment of the present disclosure. This welding torch A1 includes a torch body 1, a tip body 2, an orifice member 3, a nozzle 4, an insulator 5, a power feeding tip 7, and a guide liner 8.

The tip body 2 has a cylindrical shape, and is connected to the edge of the torch body 1. The tip body 2 extends in one sense of an axis line Ox direction, and has a cylindrical inner circumferential surface 12. A region enclosed by this inner circumferential surface 12 corresponds to an inner space 24 of the tip body 2. The tip body 2 is attached to the edge of the torch body 1 by a screw means 23. The tip body 2 is made of a conductive metal material, and receives supply of a welding current from the torch body 1. This tip body 2 has a first emission hole 22 which forms the first ring-like space 21 in corporation with the orifice member 3 to be described later and via which the inner space 24 communicates with the first ring-like space 21. Regarding this, detailed description will be given later.

To the edge side of the tip body 2 (on one side in the axis line Ox direction), a cylindrical power feeding chip 7 is connected by a screw means 71. This power feeding tip 7 is made of a conductive metal material, and is conducted to the tip body 2. This power feeding tip 7 also has a wire guide hole 72 which is coaxial with the above axis line Ox, and is inserted into this wire guide hole 72 to be in contact with the wire fed from the edge and supply a welding current to this wire.

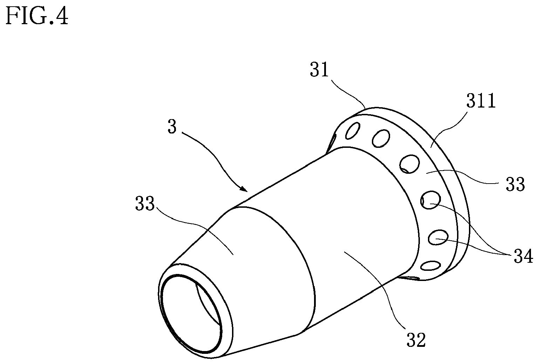

The orifice member 3 is arranged radially outside the tip body 2, and have a cylindrical shape as a whole. The orifice member 3 is respectively provided with, as shown in Figs. 1 and 4, a large radius part 31 on the base side (the other side in the axis line Ox direction), a middle radius part 32 having a cylindrical outer surface in the middle portion in the axis line Ox direction, a tapered outer surface part 33 having a radius decreasing as it extends farther toward the edge (the one side in the axis line Ox direction). As to this orifice member 3, its inner periphery is fixed to the tip body 2 by a screw means 331 at the tapered outer surface part 33 on its edge side. This orifice member 3 further has a second emission hole 34 via which the first ring-like space 21 communicates with an inner space 41 (a second ring-like space 411) of the nozzle 4 to be described later, and this will be described later in detail.

The insulator 5 has a cylindrical shape as a whole, and is arranged adjacent to the base side (on the other side in the axis line Ox direction) of the orifice member 3 so that its inner periphery is connected to an outer periphery of the tip body 2 by a screw means 51. In an acceptance hole 52 formed at a rear end of this insulator 5 so as to have an enlarged radius, the edge of the torch body 1 is inserted and is connected thereto, together with its outer skin member 13.

The nozzle 4 is a cylindrical member extending concentrically with the axis line Ox. Its edge side (on the one side in the axis line Ox direction) has a slightly smaller radius and is opened, and the inner periphery of its base side (on the other side in the axis line Ox direction) is coupled to the outer periphery of the insulator 5 by a screw means 42. The inner space of this nozzle 4 constitutes the second ring-like space 411 between the outer periphery of the orifice member 3 and the nozzle 4. Note that in the present embodiment, as the above screw means 42, the metric fine screw thread is adopted in particular.

The guide liner 8 is arranged in an inner space 12 of the torch body 1 and the inner space 24 of the tip body 2. It is provided that this guide liner 8 is cylindrical and flexible, and has a function to guide a wire (not shown) by having it inserted therein. The wire fed to the welding torch 1 is guided to the guide liner 8 in the inner space 11 of the torch body 1 and the inner space 24 of the tip body 2, advances through the wire guide hole 72 of the power feeding tip 7, and is led out from the edge of the feeding tip 7.

As shown in Fig. 1, the first ring-like space 21 is formed by providing a ring-like concave outer surface part 25 as a part of an outer peripheral surface of the tip body 2 with a radius decreasing as it extends in the axis line Ox direction for a predetermined length, and by at the same time providing a ring-like concave inner surface part 35 as a part of an inner surface of the orifice member 3 with a radius increasing as it extends in the axis line Ox direction for a predetermined length. It is sufficient that this first ring-like space 21 is formed between the outer peripheral surface of the tip body 2 and the inner peripheral surface of the orifice member 3, and in the case where the ring-like outer surface part 25 is provided on the tip body 2, the ring-like concave inner surface part 35 does not have to be provided on the orifice member 3. Also, in the case where the ring-like inner surface part 35 is provided on the orifice member 3, the ring-like outer surface part 25 does not have to be provided on the tip body 2.

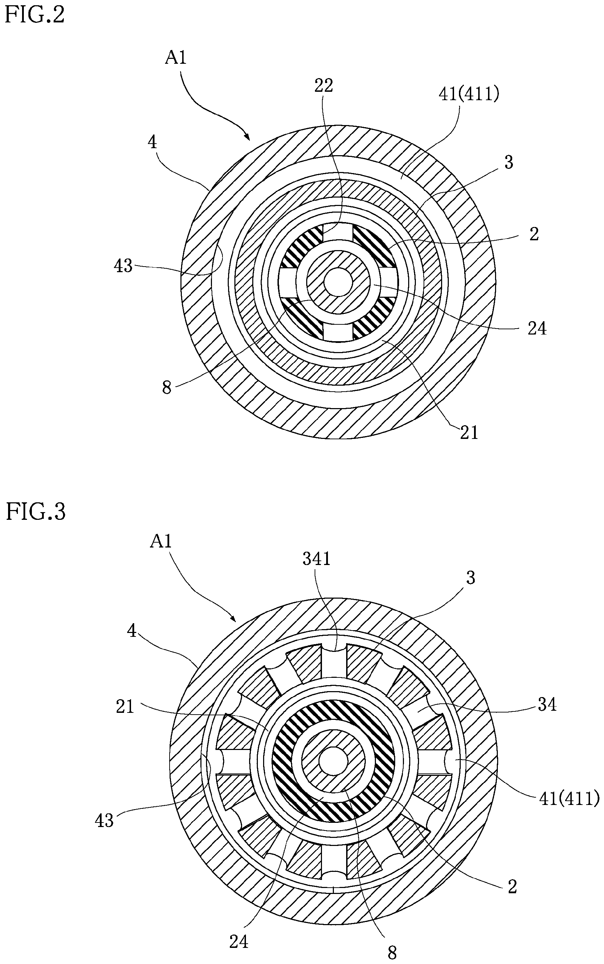

As to the first emission hole 22, it is sufficient to provide it so that the inner space 24 of the tip body 2 communicates with the first ring-like space 21, and in the present embodiment, it is formed on the edge side of the first ring-like space 21 (on the one side in the axis line Ox direction). More than one first emission holes 22 are, as shown in Fig. 2, formed circumferentially on the tip body 2, and are formed at four locations, each separated by 90 degrees, for example.

As shown in Fig. 1, the base side (on the other side in the axis line Ox direction) of the second ring-like space 411 is substantially closed by a sealing part 36 formed by having an outer periphery 311 of the large radius part 31 on the base side of the orifice member 3 contacted with or arranged close to an inner peripheral surface 43 of the nozzle 4.

The second emission hole 34 to be provided on the orifice member 3 is configured such that its outlet opening 341 is arranged close to the above sealing part 36. In the present embodiment, a lateral surface on the one side in the axis line Ox direction (on the edge side of the nozzle 4) of the large radius part 31 of the orifice member 3 is configured as a tapered surface 312 with a radius increasing as it extends farther toward the other side of the axis line Ox direction, and the outlet opening 341 of the second emission hole 34 is positioned on this tapered surface 312. In the present embodiment, the second emission hole 34 is configured as a circular hole that goes through in the radial direction of the orifice member 3, and its outlet opening 341 has an elliptical shape larger than a cross section of the second emission hole 34. Note that as shown in Fig. 3, more than one second emission holes 34 are arranged circumferentially with an even space therebetween on the orifice member 3, and as many as twelve second emission holes are provided, for example.

Subsequently, an action of the welding torch A1 according to the present embodiment is explained.

As to the welding torch A1 having the above configuration, the shield gas introduced into the inner space 24 of the tip body 2 is led out into the inner space 41 (the second ring-like space 411) of the nozzle 4, via the first emission hole 22, the first ring-like space 21, and the second emission hole 34, as the pathways shown by arrows in Fig. 1. It is sprayed as a jet surrounding the wire (not shown) from the edge (on the one side in the axis line Ox direction) of the nozzle 4.

The inner space 41 (the second ring-like space 411) of the nozzle 4 is substantially closed by the sealing part 36 on the base side (on the other side in the axis line Ox direction) of the nozzle 4, and as the outlet opening 341 is arranged close to the sealing part 36, the shield gas led out from the second emission hole 34 is prevented from flowing toward the base side (the other side in the axis line Ox direction) in the inner space 41 (the second ring-like space 411) of the nozzle 4. Thus, the drift caused by the generation of vortex is reduced, and the shield gas advances toward the edge side smoothly. As a result, the laminar flow length of the gas stream sprayed from the edge of the nozzle 4 is extended, and a sufficient shield width at the welding target point is secured by the shield gas, improving the welding quality.

In the present embodiment, as to the second emission hole 34, its outlet opening 341 is positioned on the tapered surface 312 formed on the large radius part 31 of the orifice member 3. Thus, the gas stream led out from the second emission hole 34 would have components bent diagonally forward (toward the one side in the axis line Ox direction), and the gas stream smoothly makes a turn toward the edge of the nozzle, and the effect of reducing the generation of vortex and the drift caused thereby in the gas stream flowing in the inner space 41 of the nozzle 4 improves. Further, the size of the outlet opening 341 of the second emission hole 34 becomes larger than the cross section of the second emission hole 34 (the shape of the outlet opening 341 is elliptical), and the pressure loss of when emitting the gas from the second emission hole 34 is reduced. Thus, the shield gas can be sprayed from the edge of the nozzle 4 more efficiently.

Further, in the present embodiment, as the screw means 42 to couple the inner periphery of the base side (on the other side in the axis line Ox direction) of the nozzle 4 to the outer periphery of the insulator 5, the metric fine screw thread is adopted in particular. Accordingly, as compared to the case where the trapezoidal screw is adopted as the screw means 42, a gas leakage from the inner space 41 of the nozzle 4 to the base side (on the other side in the axis line Ox direction) of the welding torch A1 can be suppressed, which also results in the saving of the shield gas or the more efficient shielding action by the shield gas. Further, the nozzle 4 can be arranged on the same axis line more precisely with respect to the tip body 2 or the power feeding tip 7, and the shield gas surrounds the welding target point as appropriate, improving the welding quality.

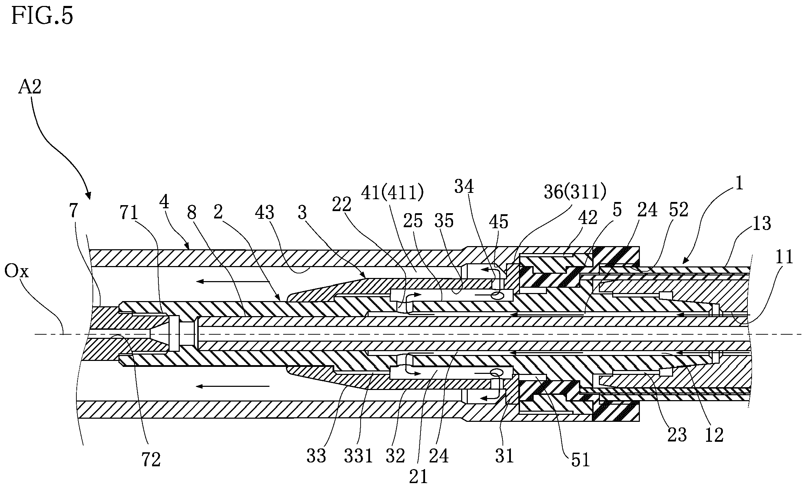

Fig. 5 shows the main part of the welding porch A2 according to the second embodiment of the present disclosure. In this figure, the same reference numerals are given as to the parts or portions that are the same with or similar to those of the welding torch A1 according to the first embodiment, for abbreviating the explanation as appropriate.

On this welding torch A2, the large radius part 31 formed on the rear end (on the other side in the axis line Ox direction) of the orifice member 3 is formed like a flange, and the second emission hole 34 is arranged close to the front side (on the one side in the axis line Ox direction) of the large radius part 31. Whereas, on the inner peripheral surface of the nozzle 4, at the point to face in the radial direction of the nozzle 4 and to be opposed to the outlet opening 341 of the second emission hole 34, a tapered flow straightening wall 45 with a radius increasing as it extends toward the front side (on the one side in the axis line Ox direction) is integrally formed in the ring-like shape.

According to this configuration, the flowing direction of the entire shield gas led out from the second emission hole 34 is changed by the flow straightening wall 45 to be directed toward the front side (on the other side in the axis line Ox direction) of the inner space 41 (the second ring-like space 411) of the nozzle 4, without flowing toward the base side (the other side in the axis line Ox direction) in the inner space 41 (the second ring-like space 411) of the nozzle 4. Accordingly, the drift caused by the generation of vortex is remarkably reduced, and the shield gas is made to flow toward the edge side smoothly. As a result, the laminar flow length of the gas stream sprayed from the edge of the nozzle 4 is extended, and a sufficient shield width at the welding target point is secured by the shield gas, improving the welding quality.

The embodiments of the present disclosure have been explained, but the scope of the present disclosure is not limited to the above embodiments, and any variation within the matters recited in the respective claims is encompassed within the scope of the present disclosure.

## Claims

1. A welding torch, comprising:
a cylindrical tip body extending in an axis line direction;
an orifice member which is arranged on a radially outer side of the tip body and between which and the tip body a first ring-like space is formed;
a cylindrical nozzle arranged on a radially outer side of the orifice member with an interposition of a second ring-like space and having an edge on one side in the axis line direction,
wherein the tip body has a first emission hole via which an inner space of the tip body communicates with the first ring-like space, and the orifice member has a second emission hole via which the first ring-like space communicates with the second ring-like space, and
wherein the second ring-like space is substantially closed by a sealing part on another side in the axis line direction, and an outlet opening of the second emission hole is arranged close the sealing part.

2. The welding torch according to claim 1, wherein the sealing part is formed by forming a large radius part on an edge on the other side in the axis line direction of the orifice member, and by having an outer periphery of the large radius part contacted with or arranged close to an inner peripheral surface of the nozzle.

3. The welding torch according to claim 2, wherein a lateral surface on the one side in the axis line direction of the large radius part is a tapered surface with a radius increasing as it extends toward the other side in the axis direction, and the outlet opening of the second emission hole is arranged on the tapered surface.

4. The welding torch according to any one of claims 1-3, wherein on the other side in the axis line direction of the orifice member, a cylindrical insulator externally fit to the tip body is arranged, and an inner periphery of an edge on the other side in the axis direction of the nozzle is coupled to an outer periphery of the insulator by a metric fine screw.

5. The welding torch according to claim 1, wherein on an inner peripheral surface of the nozzle, at a point to face a radial direction of the nozzle and to be opposed to the outlet opening of the second emission hole, a tapered flow straightening wall with a radius decreasing as it extends toward the other side in the axis line direction is formed.
